# EUROPÄISCHE PATENTANMELDUNG

(11) **EP 1 195 596 A2**
(43) Veröffentlichungstag der Anmeldung: **10.04.2002**
(21) Anmeldenummer: 01123307.9
(22) Anmeldetag: 08.10.2001
(51) Int. Cl.: G01N 3/36

(54) **Prüfvorrichtung zur Ermittlung dynamischer Werkstoffeigenschaften**

(30) Priorität: 09.10.2000 DE 10049846
(71) Anmelder: IFF Prof.Dr. Habenicht, Institut für fügetechnische Fertigungsverfahren GmbH, 85748 Garching (DE)
(72) Erfinder: Lammel, Christian Dr., 85737 Ismaning (DE)

(57) **Zusammenfassung**

Die Erfindung betrifft eine Prüfvorrichtung zur Ermittlung dynamischer Eigenschaften von Werkstoffen, insbesondere von Polymerwerkstoffen, Klebstoffen oder dergleichen sowie Werkstoffsystemen, insbesondere verklebten Sandwichsystemen, Strukturverklebungen oder dergleichen und /oder Bauteilen aufweisend eine Einspanneinrichtung (2, 3) für einen Probenkörper (5), wobei zumindest ein Einspannorgan (3) der Einspanneinrichtung (2, 3) oszillierend mittels eines Antriebs (10) antreibbar ist und der Antrieb (10) als servo-hydraulischer Antrieb mit einer hydraulischen Antriebseinheit (11) und einer Steuereinheit (12) mit einem Steuerschieber (57) zur hydraulischen Ansteuerung der Antriebseinheit (11) ausgebildet ist, wobei der Steuerschieber mittels eines Antriebsmotors (18) drehbar antreibbar ist und der Antriebsmotor (18) mit einer Ansteuerungseinrichtung (19) für den Antriebsmotor (18) verbunden ist.

## Beschreibung

Die Erfindung betrifft eine Prüfvorrichtung zur Ermittlung dynamischer Eigenschaften von Werkstoffen, insbesondere von Polymerwerkstoffen, Klebstoffen oder dergleichen sowie Werkstoffsystemen, insbesondere verklebten Sandwichsystemen, Strukturverklebungen oder dergleichen und /oder Bauteilen nach dem Oberbegriff des Anspruchs 1.

Übliche Werkstoffprüfvorrichtungen weisen eine Einspanneinrichtung für einen Probenkörper auf, wobei der Probenkörper einendig fest eingespannt ist und anderendig mit einem Einspannorgan in Verbindung steht, welches mit einem Schwingantrieb in Verbindung steht, so daß der Probenkörper einer schwingenden Belastung aussetzbar ist. Der Schwingantrieb ist beispielsweise als doppelt wirkende hydraulische Kolben-Zylindereinheit ausgebildet. Zur Erzeugung der Antriebsschwingung sind der hydraulischen Kolben-Zylindereinheit solenoidgetriebene Ventileinrichtungen vorgeschaltet, welche von einer Steuerungseinrichtung derart angesteuert werden, daß der Arbeitskolben der hydraulischen Kolben-Zylindereinheit eine oszillierende Bewegung ausführt, welche über das mit der Kolbenstange des Arbeitskolbens in Verbindung stehende Einspannorgan auf den Probenkörper übertragen wird.

Derartige Werkstoffprüfvorrichtungen haben den Nachteil, daß eine vorbestimmte, durch die Steuerungseinrichtung aufbereitete Schwingungsform, z.B. eine sinusförmige oder eine rampenförmige Schwingungsform durch die Ventileinrichtungen im Zusammenspiel mit der hydraulischen Kolben-Zylindereinheit verzerrt wird, so daß am Probenkörper eine Prüfkraft mit einer von der Sollschwingungsform abweichenden Schwingungsform, beispielsweise mit Kraft- und/oder Beschleunigungsspitzen anliegt. Diese Kraft- und/oder Beschleunigungsspitzen werden maßgeblich durch Unstetigkeiten bzw. durch nicht proportionale Schaltcharakteristiken der Steuerventile verursacht.

Nachteilig bei derartigen Werkstoffprüfvorrichtungen ist auch, daß zur Kompensierung der Signalverzerrungen ein erhöhter Aufwand bezüglich der Steuersignalaufbereitung zur Ansteuerung der Solenoidventileinheiten erforderlich ist. Außerdem beanspruchen derartige Werkstoffprüfvorrichtungen einen großen Bauraum und sind kompliziert aufgebaut. Weiterhin eignen sich derartige Universalwerkstoffprüfvorrichtungen nur bedingt zur Ermittlung des Dauerschwingverhaltens von Polymerwerkstoffen, da diese Werkstoffprüfvorrichtungen üblicherweise mit hohen Prüffrequenzen arbeiten, damit die zur Ermittlung der Dauerfestigkeit erforderliche Lastspielanzahl (üblicherweise 10⁶ bis 10⁷ Lastspiele) möglichst schnell erreicht wird, so daß die Versuchsdauer in angemessenen Grenzen bleibt. Diese Prüfmaschinen sind jedoch zur Ermittlung der Dauerfestigkeitseigenschaften von Polymerwerkstoffen ungeeignet, da diese Werkstoffe eine Frequenzabhängigkeit der dynamischen Festigkeitswerte besitzen. Bei zu hoher Prüffrequenz, werden die Probenkörper in einem unerwünscht hohen Maß durch die dynamische Bewegung selbst erwärmt, wodurch ihre Festigkeitseigenschaften verändert und somit die Versuchsergebnisse verfälscht werden.

Aufgabe der Erfindung ist es, eine Prüfvorrichtung anzugeben, welche die Nachteile des Standes der Technik vermeidet und einen geringen Bauraum benötigt sowie einfach und kostengünstig aufgebaut ist.

Weiterhin soll die Prüfvorrichtung in weiten Grenzen an den zu prüfenden Werkstoff und / oder an das zu prüfende Werkstoffsystem anpaßbar sein.

Außerdem soll die Prüfvorrichtung gewährleisten, daß ein Ansteuerungssignal verzerrungsfrei in eine Prüfkraft bzw. in einen Prüfweg umgewandelt wird. Zudem sollen Prüfversuche zeit- und kostensparend durchführbar sein.

Diese Aufgaben werden mit einer Prüfvorrichtung mit den Merkmalen des Anspruchs 1 gelöst.

Eine erfindungsgemäße Prüfvorrichtung zur Ermittlung dynamischer Werkstoffeigenschaften von Polymerwerkstoffen weist eine Einspanneinrichtung für einen Probenkörper auf, wobei zumindest ein Einspannorgan der Einspanneinrichtung oszillierend mittels eines Antriebs antreibbar ist, und der Antrieb eine hydraulische Antriebseinheit und eine Steuereinheit mit einem Steuerschieber zur hydraulischen Ansteuerung der Antriebseinheit aufweist, wobei der Steuerschieber mittels eines Antriebsmotors drehbar antreibbar ist und der Antriebsmotor mit einer Ansteuerungseinrichtung für den Antriebsmotor verbunden ist.

Gemäß einer bevorzugten Ausführungsform ist der Steuerschieber mittels eines Gewindeorgans mit dem Arbeitskolben der hydraulischen Kolben-Zylindereinheit mechanisch gekoppelt verbunden.

Weitere vorteilhafte Ausführungsformen sind in den Unteransprüchen angegeben.

Im folgenden wird die Erfindung anhand der Zeichnungen beispielhaft näher erläutert. Es zeigen:
- Figur 1: schematisch eine Draufsicht auf eine erfindungsgemäße Prüfvorrichtung;
- Figur 2: einen hydraulischen Linearantrieb der erfindungsgemäßen Prüfvorrichtung in einer Ruhestellung;
- Figur 3: den hydraulischen Linearantrieb gemäß Figur 2 in einer ersten Arbeitsstellung (Zugkraftstellung);
- Figur 4: den hydraulischen Linearantrieb gemäß Figur 2 in einer zweiten Arbeitsstellung (Druckkraftstellung).

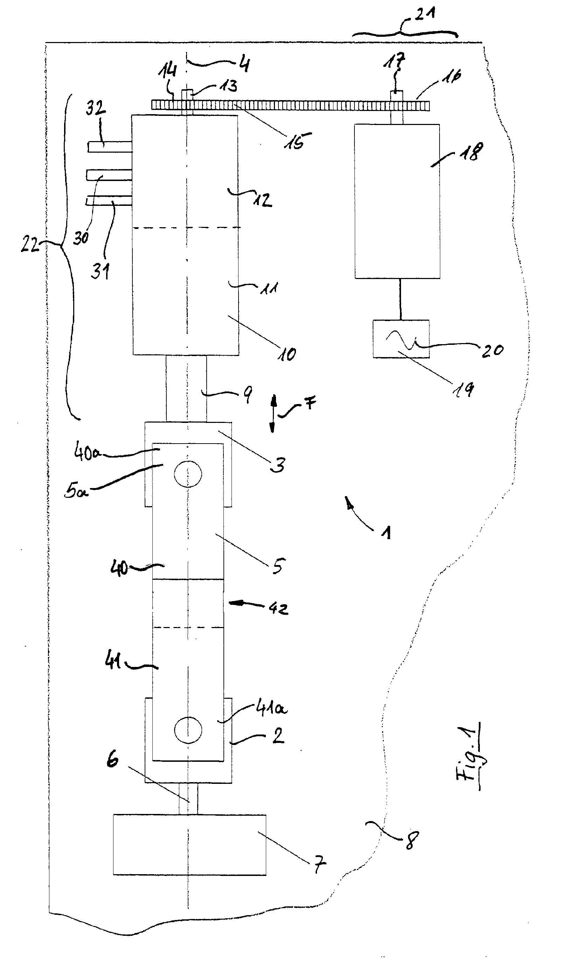

Eine erfindungsgemäße Prüfvorrichtung 1 gemäß Figur 1 für polymere Werkstoffe, insbesondere Klebstoffe weist ein erstes Einspannorgan 2 und ein zweites Einspannorgan 3 auf. Die Einspannorgane 2, 3 sind entlang einer Achse 4 fluchtend beabstandet gegenüberliegend angeordnet, wobei zwischen den Einspannorganen 2, 3 ein Probenkörper 5 einspannbar ist. Das erste Einspannorgan 2 steht über eine Meßeinrichtung 6, beispielsweise eine Kraft- und/oder Wegmeßeinrichtung mit einem Festlagerbock 7 in Verbindung, welcher mit einer Grundplatte 8 der Prüfvorrichtung 1 fest verbunden ist. Das zweite Einspannorgan 3 steht mit einer Kolbenstange 9 eines Linearantriebs 10, beispielsweise eines hydraulischen Linearantriebs 10, in Verbindung. Der Linearantrieb 10 weist eine doppelt wirkende hydraulische Kolben-Zylindereinheit 11 und eine Steuereinheit 12 auf. Die Steuereinheit 12 weist eine um die Achse 4 drehbar gelagerte Steuerwelle 13 auf, welche ein Stück aus der Steuereinheit 12 ragt. Auf der Steuerwelle 13 sitzt eine Abtriebsscheibe 14, welche über einen Antriebsriemen 15 und über eine Antriebsscheibe 16 mit einer Antriebswelle 17 eines Antriebsmotors 18 verbunden ist.

Die Steuereinheit 12 weist einen Zulaufstutzen 30, einen ersten Rücklaufstutzen 31 und einen zweiten Rücklaufstutzen 32 für ein Druckmedium auf, welches von einer Druckmediumversorgungseinrichtung (nicht gezeigt), beispielsweise einem Hydraulik-Aggregat, vorzugsweise mit vorbestimmbarem Druck und/oder vorbestimmbaren Massenstrom bereitgestellt wird.

Der Antriebsmotor 18 ist als elektrischer Servomotor ausgebildet, welcher mit einer Ansteuerungseinrichtung 19, beispielsweise einem mit einer Motorsteuerungskarte ausgerüsteten Rechner verbunden ist. Die Ansteuerungseinrichtung 19 stellt ein Ansteuerungssignal 20 zur Verfügung, welches beispielsweise eine Sinusform mit einer veränderbar vorbestimmbaren Frequenz f und/oder einer veränderbar vorbestimmbaren Amplitude aufweist. Der Antriebsmotor 18, die Antriebswelle 17, die Antriebsscheibe 16 sowie die Ansteuerungseinrichtung 19 bilden eine elektrische Antriebseinheit 21, welche über den Antriebsriemen 15 mit einer hydraulischen Antriebseinheit 22 aufweisend die Abtriebsscheibe 14, die Steuerwelle 13, die Steuereinheit 12, die hydraulische Kolben-Zylindereinheit 11 und die Kolbenstange 9 in Verbindung steht.

Die hydraulische Antriebseinheit 22, das zweite Einspannorgan 3, der Probenkörper 5, das erste Einspannorgan 2, die Meßeinrichtung 6 und der Festlagerbock 7 sind nacheinander aufeinanderfolgend entlang der Achse 4 angeordnet. Die elektrische Antriebseinheit 21 ist seitlich versetzt benachbart zur hydraulischen Antriebseinheit 22 angeordnet. Gegebenenfalls kann die elektrische Antriebseinheit 21 selbstverständlich auch in axialer Flucht bezüglich der Achse 4 mittels einer Wellenkupplung (nicht gezeigt) mit der Steuerwelle 13 der hydraulischen Antriebseinheit in Verbindung stehen.

Als Linearantrieb 10 hat sich insbesondere ein servohydraulische Linearantrieb, beispielsweise der Fa. Rank Modellnr. 1666-000, Typ RLNG5H50, bewährt, welcher üblicherweise als Zustellantrieb in CNC-gesteuerten Werkzeugmaschinen zum Einsatz kommt. Auf diesem Einsatzgebiet kommt es auf besonders hohe Zustellgenauigkeit entlang des Verfahrweges der Kolbenstange 9 an. Eine besonders hohe Abbildungsgenauigkeit einer drehschwingenden Antriebsbewegung der Steuereinheit 12 in eine linearschwingende Bewegung der Kolbenstange 9 ist auf diesem Einsatzgebiet nicht gefordert. Überraschenderweise gelingt dies mit einem derartigen Linearantrieb 10, welcher für einen ganz anderen Einsatzzweck konzipiert wurde, in Kombination mit einem Elektroservomotor, beispielsweise eines bürstenlosen Servomotors der August Heine GmbH Typ KSY 0830.90-1R45, in ganz besonders hohem Maße.

Das Steuersignal 20 ist hinsichtlich seiner Frequenz f in weiten Grenzen mittels der Steuereinrichtung, beispielsweise einem handelsüblichen Rechner voreinstellbar bzw. programmierbar, wobei die Frequenz f insbesondere derart gewählt ist, daß sich der zu prüfende Werkstoff (Probenkörper 5) nicht unzulässig stark erwärmt. Für die Prüfung von Klebstoffen hat sich eine Frequenz f im Bereich zwischen 0 < f ≤ 15Hz bewährt. Die Amplitudenhöhe des Steuersignales 20 ist ein Maß für den Prüfweg s, den die Kolbenstange 9 zusammen mit dem zweiten Einspannorgan 3 und dem hierin eingespannten ersten Einspannende 5a des Probenkörpers 5 während eines Schwingungszyklusses zurücklegt.

Für die Prüfung von Klebstoffen bzw. geklebten Verbindungen hat sich ein Prüfweg s im Bereich von -20mm ≤ s ≤ +20 mm, insbesondere -10mm ≤ s ≤ +10 mm bewährt, wobei der Prüfweg s auf die Eigenschaften des zu prüfenden Klebstoffes, z. B. dessen Elastizität, abgestimmt ist.

Der Probenkörper 5 ist beispielsweise gemäß der DIN EN 53581 oder DIN EN 9664 als Probenkörper 5 mit einer ersten Probenkörperplatte 40 und einer zweiten Probenkörperplatte 41 ausgebildet. Die Probenkörperplatten 40, 41 weisen jeweils ein freies Einspannende 40a bzw. 41a auf, und überlappen sich mit den den freien Einspannenden 40a, 41a gegenüberliegenden Enden, so daß eine Überlappungszone 42 ausgebildet ist. Im Bereich der Überlappungszone 42 sind die Probenkörperplatten 40, 41 mit dem zu prüfenden Klebstoff verklebt. Z. B. je nach Dicke der zu prüfenden Klebstoffschicht im Bereich der Überlappungszone 42 ist die Amplitude des Steuersignals 20 derart anzupassen, daß ein für die Dicke der Klebstoffschicht geeigneter Prüfweg s eingestellt ist.

Durch Variation des Druckes, mit dem das Druckmedium am Zuführstutzen 30 anliegt, ist die Prüfkraft Fₘₐₓ, welche durch die Kolbenstange 9 auf den Probenkörper 5 einwirkt, in ihrer maximalen Größe einstellbar. Die Prüfkraft F weist einen zum Prüfsignal 20 korrespondierenden zeitlichen Verlauf auf und ist somit eine Prüfkraft, welche mit der Frequenz f schwingt. Der Maximalwert Fₘₐₓ der Prüfkraft F ist über die Höhe des Drucks des Druckmediums einstellbar und ist zweckmäßigerweise auf die mechanischen Eigenschaften des Probenkörpers 5 abgestimmt. Abhängig von der statischen Festigkeit und der Klebfläche hat sich z. B. eine Maximalkraft Fₘₐₓ im Bereich zwischen -10 kN ≤ Fₘₐₓ ≤ +10 kN, insbesondere -5 kN ≤ Fₘₐₓ ≤ +5 kN, bewährt.

Im folgenden wird der Linearantrieb 10 näher beschrieben:

Die Steuereinheit 12 weist ein Steuergehäuse 50 auf, welches eine hohlzylindrische Raumform mit der Achse 4 als Mittelachse aufweist und von einer Zylinderwandung 51 begrenzt ist. In Axialrichtung ist das Steuergehäuse 50 durch eine erste Begrenzungswandung 52 und eine zweite Begrenzungswandung 53 begrenzt, so daß ein Steuergehäuseinnenraum 54 umgrenzt ist. Die erste und die zweite Begrenzungswandung 52, 53 weisen jeweils im Querschnitt runde Öffnungen 56, 55 auf, deren Mittelachse die Achse 4 ist. Die Öffnungen 55, 56 fluchten in axialer Richtung zueinander.

Im Steuergehäuse 50 sitzt ein Steuerschieber 57, welcher in Axialrichtung verschiebbar und um die Achse 4 drehbar angeordnet ist. Der Steuerschieber 57 weist an seinen freien Enden jeweils einen Lagerzapfen 58 bzw. 59 auf, mit denen der Steuerschieber 57 in den Öffnungen 55, 56 axial verschieblich und um die Achse 4 drehbar gelagert sitzt. Der Steuerschieber 57 ist bezüglich seiner axialen Erstreckung mittig und jeweils an seinen freien Enden im Durchmesser verdickt ausgebildet, so daß benachbart zur ersten Begrenzungswandung 52 ein erster Steuerkolben 60 und benachbart zur zweiten Begrenzungswandung 53 ein zweiter Steuerkolben 61 ausgebildet ist. In Axialrichtung mittig zwischen den Steuerkolben 60, 61 ist ein dritter Steuerkolben 62 ausgebildet. Die Steuerkolben 60, 61, 62 haben einen auf den Innendurchmesser des Steuergehäuses 50 abgestimmten Außendurchmesser und liegen gedichtet an der Innenseite des Steuergehäuses 50 an. Somit ist zwischen dem ersten Steuerkolben 60 und dem zweiten Steuerkolben 61 eine erste Durchströmkammer 64 und zwischen dem dritten Steuerkolben 62 und dem zweiten Steuerkolben 61 eine zweite Durchströmkammer 65 begrenzt.

Die bezüglich des Steuerschiebers 57 endseitigen Steuerkolben 60, 61 weisen etwa die doppelte axiale Erstreckung des mittleren dritten Steuerkolbens 62 auf. Der erste Steuerkolben 60 weist eine der Begrenzungswandung 52 zugewandte erste Stirnseite 60a (Figur 3) und eine der ersten Durchströmkammer 64 zugewandte zweite Stirnseite 60b auf. Der zweite Steuerkolben 61 weist eine der zweiten Begrenzungswandung 53 zugewandte Stirnseite 61a und eine der zweiten Durchströmkammer 65 zugewandten Stirnseite 61b auf. Der mittlere Steuerkolben 62 weist eine der ersten Durchströmkammer 64 zugewandte Stirnseite 62a und eine der zweiten Durchströmkammer 65 zugewandte Stirnseite 62b auf. In die Zylinderwandung 51 sind in axial gleichmäßig beabstandeter Aufeinanderfolge eine erste Öffnung 67, eine zweite Öffnung 68 und eine dritte Öffnung 69 angeordnet, welche jeweils in den Steuergehäuseinnenraum 54 münden. Bezüglich des Steuergehäuses 50 außenseitig steht die erste Öffnung 67 mit dem Rücklaufstutzen 32, die mittlere, zweite Öffnung 68 mit dem Zulaufstutzen 30 und die dritte Öffnung 69 mit dem ersten Rücklaufstutzen 31 in Verbindung. Jeweils in Axialrichtung zwischen zwei Öffnungen 67, 68 bzw. 68, 69 sind gegenüberliegend zu den Öffnungen 67, 68, 69 eine erste Überströmöffnung 70 und eine zweite Überströmöffnung 71 angeordnet.

Axial an die zweite Begrenzungswandung 53 anschließend ist die hydraulische Kolben-Zylindereinheit 11 angeordnet. Die hydraulische Kolben-Zylindereinheit 11 weist einen Arbeitszylinder 80 auf, in dem ein Arbeitskolben 81 axial verschieblich gelagert ist. Die Mittelachse des Arbeitszylinders 80 ist die Achse 4. Das freie Ende des Arbeitszylinders 80 ist durch eine Begrenzungswandung 82 mit einer zentralmittigen, im Querschnitt runden Öffnung 83 begrenzt. Am Arbeitskolben 81 ist die Kolbenstange 9 befestigt, welche die Öffnung 83 durchgreift. Die Kolbenstange 9 ist vom Arbeitskolben 81 weg bis fast an ihr freies Ende 9a als Hohlzylinder einen Zylinderinnenraum 9b aufweisend ausgebildet.

Der Arbeitskolben 81 weist zentralmittig eine Axialgewindebohrung 84 auf, welche mit den Öffnungen 55, 56 fluchtet und einendig in den Zylinderinnenraum 9b und anderendig in den Innenraum des Arbeitszylinders 80 mündet. Der Arbeitskolben 81 teilt den Innenraum des Arbeitszylinders 80 in einen steuereinheitsseitigen ersten Druckraum 85 und einen zweiten Druckraum 86. Im Bereich der Begrenzungswandung 82 ist in die Wandung des Arbeitszylinders 81 eine Öffnung 87 eingebracht, welche über eine Überströmleitung 88 mit der ersten Überströmöffnung 70 der Steuereinheit 12 in Verbindung steht. Im Bereich der Begrenzungswandung 53 ist in die Wandung des Zylinders 80 eine Öffnung 89 eingebracht, welche über eine zweite Überströmleitung 90 mit der zweiten Überströmöffnung 71 in Verbindung steht.

Der zweite Lagerzapfen 59 ist bis annähernd zur Begrenzungswandung 82 des Arbeitszylinders 80 hin verlängert und in dem Abschnitt, welcher in den Arbeitszylinder 80 ragt als Gewindespindel 91 ausgebildet, welche die Gewindebohrung 84 des Arbeitskolbens 81 durchgreift und ein Stück in den Zylinderinnenraum 9b der Kolbenstange 9 ragt, so daß ein Gewindeorgan 84, 91 gebildet ist, welches eine mechanische Kopplung des Steuerschiebers 57 an den Arbeitskolben 81 darstellt.

Im folgenden wird die Funktionsweise des Linearantriebs 10 näher erläutert:

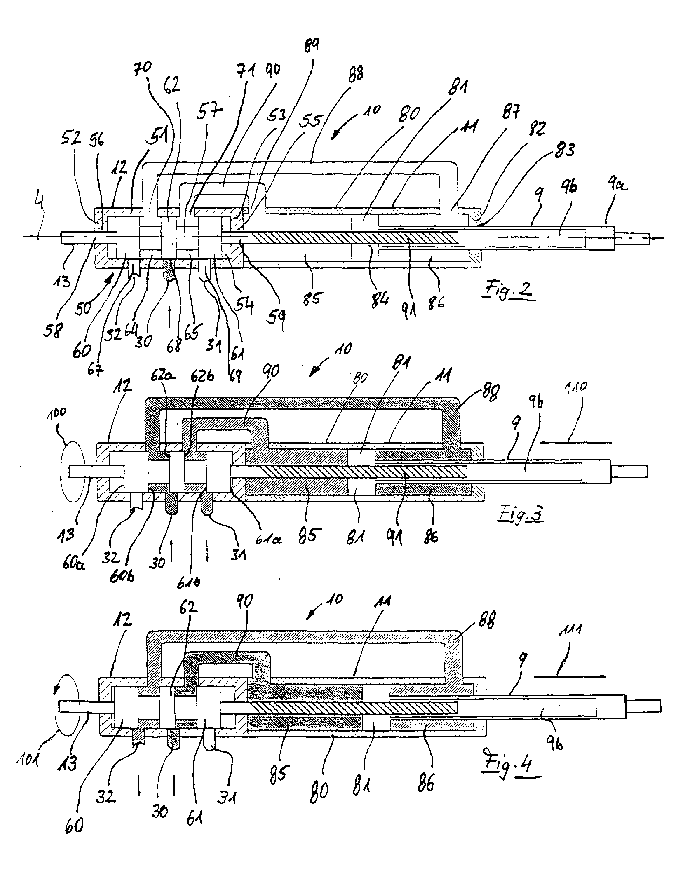

In einer Ausgangsstellung (Figur 2) befindet sich der Steuerschieber 57 bezüglich des Steuergehäuseinnenraums 54 in einer axial mittigen Stellung, so daß die Zulauföffnung 68 vom dritten Steuerkolben 62 verschlossen ist. Die erste Rücklauföffnung 67 ist vom ersten Steuerkolben 60 und die zweite Rücklauföffnung 69 vom zweiten Steuerkolben 61 verschlossen. Am Zulaufstutzen 30 liegt ein Druckmedium mit einem vorbestimmten Arbeitsdruck an. Der Arbeitskolben 81 befindet sich bezüglich der axialen Erstreckung des Arbeitszylinders 80 in einer etwa mittigen Position. In dieser Stellung sind die Druckräume 85, 86 drucklos, so daß der Arbeitskolben 81 und somit die Kolbenstange 9 in ihrer Ausgangslage verharren.

Wird nun der Steuerschieber 57 mittels des Servomotors 18 in einer ersten Drehrichtung 100 verdreht, so erfährt der Steuerschieber 57 aufgrund seiner mechanischen Kopplung über die Gewindespindel 91 mit dem Arbeitskolben 81 eine Axialverschiebung im Steuergehäuse 50 in Richtung zur zweiten Begrenzungswandung 53. Hierbei gibt der dritte Steuerkolben 62 die Zulauföffnung 68 frei, so daß die Zulauföffnung 68 über die erste Durchströmkammer 64, die Überströmöffnung 70 und die Überströmleitung 88 mit dem Druckraum 86 hydraulisch in Verbindung steht (Strömungsweg I). Gleichzeitig gibt der zweite Steuerkolben 61 die Rücklauföffnung 69 frei, so daß die Rücklauföffnung 69 über die zweite Durchströmkammer 65, der Überströmöffnung 71 und der Überströmleitung 90 mit der ersten Druckkammer 85 hydraulisch in Verbindung steht (Strömungsweg II).

Im zweiten Druckraum 86 liegt somit Druckmedium mit Arbeitsüberdruck an, welcher den Arbeitskolben 81 in Richtung auf die Steuereinheit 12 zubewegt. Das hierbei im Druckraum verdrängte Druckmedium wird über die Überströmleitung 90, die zweite Durchströmkammer 65 und den Rücklaufstutzen 31 (Strömungsweg II) zur Druckmediumversorgungseinheit zurückgeführt.

Dieser Betriebszustand bleibt solange erhalten, wie der Steuerschieber 57 in Drehrichtung 100 angetrieben wird, weil bei fortgesetzter Drehung über die Gewindespindel 91 der Relativabstand zwischen dem Arbeitskolben 81 und dem Steuerschieber 57 in dem Maße, wie sich der Arbeitskolben 81 in Richtung auf die Steuereinheit 12 zubewegt (Zugrichtung 110) vermindert wird, so daß die oben beschriebenen Strömungswege I und II und somit der beschriebene hydraulische Betriebszustand erhalten bleibt. Sobald die Drehung des Steuerschiebers 57 in Drehrichtung 100 unterbrochen wird, ist auch aufgrund des Stillstandes der Gewindespindel 91 bezüglich des Arbeitskolbens 81 der Abstand zwischen dem Arbeitskolben 81 und dem Steuerschieber 57 festgelegt, so daß sich der Steuerschieber 57 zusammen mit dem Arbeitskolben 81 in die Richtung 110 mitbewegt und somit nach einer bestimmten Wegstrecke die Zuführöffnung 68 vom dritten Steuerkolben 62 wieder verschlossen wird, so daß sich der Steuerschieber 57 wieder in der Ausgangsstellung gemäß Figur 2 befindet.' In dieser Stellung des Steuerschiebers 57 ist der Strömungsweg I unterbrochen, so daß kein weiteres Druckmedium in den Druckraum 86 gelangt. Der Arbeitskolben 81 verharrt somit in der zum Zeitpunkt des Unterbrechens des Strömungswegs I eingenommenen Stellung.

Wird der Steuerschieber 57 ausgehend von der Ausgangsstellung gemäß Figur 2 entlang einer der Drehrichtung 100 entgegengesetzten Drehrichtung 101 angetrieben, so wird aufgrund der Gewindekopplung zwischen dem Steuerschieber 57 und dem Arbeitskolben 81 der Steuerschieber 57 ein Stück in Richtung auf die erste Begrenzungswandung 52 zu verschoben, wobei der dritte Steuerkolben 62 die Zulauföffnung 68 zur zweiten Durchströmkammer 65 hin freigibt und der erste Steuerkolben 60 die zweite Rücklauföffnung 67 freigibt, so daß diese mit der ersten Durchströmkammer 64 in Verbindung steht.

In dieser Stellung gelangt über die Zulauföffnung 68, die zweite Durchströmkammer 65 und die zweite Überströmleitung 90 Druckmedium in den ersten Druckraum 85 (Strömungsweg III), so daß der Arbeitskolben 81 und die Kolbenstange 9 in eine zur Zugrichtung 110 entgegengesetzte Druckrichtung 111 verschoben werden. Im Druckraum 86 verdrängtes Druckmedium gelangt über die erste Überströmleitung 88, die erste Überströmöffnung 70, die Durchströmkammer 64 und den Rücklaufstutzen 32 (Strömungsweg IV) zurück zur Druckmediumversorgungseinheit.

Analog zum Zugbetriebszustand des Linearantriebs 10 gemäß Figur 3 bleibt der Druckbetriebszustand des Linearantriebs 10 gemäß Figur 4 so lange bestehen, wie der Steuerschieber 57 in der Drehrichtung 101 angetrieben wird, weil sich der relative Abstand zwischen dem Steuerschieber 57 und dem Arbeitskolben 81 wegen der Gewindekopplung (Gewindespindel 91) im gleichen Maße vergrößert wie sich der Arbeitskolben' 81 im Arbeitszylinder 80 in Richtung 111 bewegt. Analog zum Zugzustand gemäß Figur 3 ist der Abstand zwischen dem Arbeitskolben 81 und dem Steuerschieber 57 nach Beendigung der Drehbewegung in Richtung 101 über die Gewindespindel 91 festgelegt, so daß der Steuerschieber 57 zusammen mit dem Arbeitskolben 81 so lange in die Richtung 111 mitbewegt wird, bis der dritte Steuerkolben 62 die Zuströmöffnung 68 wieder verschließt und somit der Strömungsweg III unterbrochen ist.

Gemäß einer bevorzugten Ausführungsform sind auf einer Grundplatte 8 mehrere Prüfvorrichtungen 1 nebeneinander angeordnet, wobei jeweils die Antriebsmotoren 18, insbesondere die Servoelektromotoren 18 der Prüfvorrichtungen 1 unabhängig voneinander ansteuerbar sind. Hierdurch ist insbesondere gewährleistet, daß die Gesamtversuchsdauer trotz der wegen der Frequenzempfindlichkeit der zu prüfenden Polymerwerkstoffe verlängerten Einzelversuchsdauer bis zum Erreichen der Dauerfestigkeitslastspielzahl reduziert ist.

Ein derartiger Linearantrieb setzt überraschenderweise in Kombination mit einem elektroservomotorischen, oszillierenden Drehantrieb des Steuerschiebers 57 die Schwingungen des Steuersignales 20 unverzerrt ohne störende Kraft- und/oder Beschleunigungsspitzen in eine lineare, entsprechend dem Steuersignal 20 oszillierende Bewegung der Kolbenstange 9 um, so daß mittels einer einfachen Steuereinrichtung 19 ohne komplizierte Entzerr-Algorithmen das gewünschte Steuersignal 20 kreiert werden kann. Die hohe Abbildungsgenauigkeit des Steuersignales 20 auf die resultierende Prüfkraft F durch die erfindungsgemäße Prüfvorrichtung 1 erlaubt es zudem, andere als die üblicherweise verwendeten sinusförmigen Prüfkraftverläufe zum Eisatz zu bringen. Insofern können mit der erfindungsgemäßen Prüfvorrichtung in einfacher Art und Weise reale, von der Sinusform abweichende Lastkollektive erzeugt werden und Versuchen zugrunde gelegt werden. Die Bildung eines solchen realen Lastkollektives kann einfach in der Steuereinheit programmiert werden. Ebenso einfach gelingt die Versuchsdatenauswertung der von der Meßeinrichtung 6 ermittelten Daten, so daß insbesondere bei einer Mehrfachanordnung der Prüfvorrichtungen 1 ein handelsüblicher Rechner zur Ansteuerung der Antriebsmotoren 18 und zur Auswertung der Versuchsdaten ausreicht, was die Bereitstellungskosten einer erfindungsgemäßen Mehrfach-

Prüfvorrichtung sowie die Versuchsdurchführungskosten erheblich senkt.

Die erfindungsgemäße Prüfvorrichtung 1 hat sich auch zur Ermittlung des Alterungsverhaltens von Probenkörpern 5 unter mechanischer Beanspruchung bewährt.

## Patentansprüche

1. Prüfvorrichtung zur Ermittlung dynamischer Werkstoffeigenschaften von Polymerwerkstoffen aufweisend eine Einspanneinrichtung (2, 3) für einen Probenkörper (5), wobei zumindest ein Einspannorgan (3) der Einspanneinrichtung (2, 3) oszillierend mittels eines Antriebs (10) antreibbar ist,
**dadurch gekennzeichnet, daß**
der Antrieb (10) als servo-hydraulischer Antrieb mit einer hydraulischen Antriebseinheit (11) und einer Steuereinheit (12) mit einem Steuerschieber (57) zur hydraulischen Ansteuerung der. Antriebseinheit (11) ausgebildet ist, wobei der Steuerschieber (57) mittels eines Antriebsmotors (18) drehbar antreibbar ist und der Antriebsmotor (18) mit einer Ansteuerungseinrichtung (19) für den Antriebsmotor (18) verbunden ist.

2. Prüfvorrichtung nach Anspruch 1,
**dadurch gekennzeichnet, daß**
die hydraulische Antriebseinheit (11) eine hydraulische Kolben-Zylindereinheit (11) mit einem Arbeitskolben (81) und einer Kolbenstange (9) ist, wobei der Steuerschieber (57) mittels eines Gewindeorgans (91, 84) mit dem Arbeitskolben (81) der hydraulischen Zylindereinheit (11) mechanisch gekoppelt verbunden ist.

3. Prüfvorrichtung nach Anspruch 1 und/oder 2,
**dadurch gekennzeichnet, daß**
der Antriebsmotor (18) ein elektrischer Servomotor ist und über einen Riementrieb (14, 15, 16) mit der Steuereinheit (12) des Antriebs (10) in Verbindung steht

4. Prüfvorrichtung nach einem oder mehreren der vorangegangenen Ansprüche,
**dadurch gekennzeichnet, daß**
die Ansteuerungseinrichtung (19) ein mit einer auf den Antriebsmotor (18) abgestimmten Steuerungskarte ausgerüsteter Rechner ist und der Rechner zur Ansteuerung des Antriebsmotors (18) der Auswerterechner ist und die Ansteuerungseinrichtung (19) ein Ansteuerungssignal (20) zur Verfügung stellt, welches eine Sinusform mit einer veränderbar vorbestimmbaren Frequenz (f) und/oder einer veränderbar vorbestimmbaren Amplitude aufweist, wobei das Ansteuerungssignal (20) eine von einer Sinusform abweichende Form, beispielsweise einen Zacken-, Rampen- oder dergleichen -verlauf aufweisen kann und die Frequenz (f)die Prüffrequenz für den Probenkörper (5) ist und im Bereich zwischen 0 < f ≤ 15 Hz liegt.

5. Prüfvorrichtung nach einem oder mehreren der vorangegangenen Ansprüche,
**dadurch gekennzeichnet, daß**
der Antriebsmotor (18) ein bürstenloser Servomotor des Herstellers August Heine GmbH, Typ KSY 0630.90-1 R4-5 ist und der Antrieb (10) ein servo-hydraulischer Linearantrieb der Firma Rank, Modellnr. 1666-000, Typ RLNG5H50 ist, wobei der hydraulische Antrieb (10) mit einem Hydraulik-Aggregat in Verbindung steht, an welchen der Hydrauliköldruck und die Hydraulikölfördermenge einstellbar ist.

6. Prüfvorrichtung nach einem oder mehreren der vorangegangenen Ansprüche,
**dadurch gekennzeichnet, daß**
mehrere Prüfvorrichtungen (1) auf einer Grundplatte (8) angeordnet sind, wobei die Antriebsmotoren (18) der Prüfvorrichtungen (1) unabhängig voneinander ansteuerbar sind.

7. Prüfvorrichtung nach einem oder mehreren der vorangegangenen Ansprüche,
**dadurch gekennzeichnet, daß**
das zweite Einspannorgan (2) über eine Meßeinrichtung (6) mit einem Festlagerbock (7) in Verbindung steht, welcher auf der Grundplatte (8) befestigt ist wobei die Meßeinrichtung (6) eine Kraft- und/oder Wegmeßeinrichtung ist, welche mit dem Auswerterechner in Verbindung steht.

8. Prüfvorrichtung nach einem oder mehreren der vorangegangenen Ansprüche,
**dadurch gekennzeichnet, daß**
die Einspannorgane (2, 3), der Probenkörper (5) und der Antrieb (10) entlang einer Achse (4) aufeinanderfolgend angeordnet sind.

9. Prüfvorrichtung nach einem oder mehreren der vorangegangenen Ansprüche,
**dadurch gekennzeichnet, daß**
der Antriebsmotor (18) benachbart neben dem Antrieb (10) oder mit der Achse (4) fluchtend angeordnet ist.

10. Prüfvorrichtung nach einem oder mehreren der vorangegangenen Ansprüche,
**dadurch gekennzeichnet, daß**
der Arbeitskolben (81) des Antriebs (10) um einen Prüfweg (s) im Bereich von -20mm ≤ s ≤ +20mm, insbesondere -10mm ≤ s ≤ +10mm verschiebbar antreibbar ist und/oder durch Variation des Druckes des Druckmediums die maximale Prüfkraft (Fₘₐₓ) einstellbar ist, wobei die maximale Prüfkraft (Fₘₐₓ) im Bereich zwischen -10kN ≤ Fₘₐₓ ≤ +10kN, insbesondere -5kN ≤ Fmax < +5kN liegt.

11. Prüfvorrichtung nach einem oder mehreren der vorangegangenen Ansprüche,
**dadurch gekennzeichnet, daß**
die Steuereinheit (12) ein hohlzylindrisches Steuergehäuse (50) mit einer Zylinderwandung (51) aufweist, welches in Axialrichtung durch eine erste Begrenzungswandung (52) und eine zweite Begrenzungswandung (53) begrenzt ist und im Steuergehäuse (50) der Steuerschieber (57) axial verschiebbar und um die Achse (4) drehbar angeordnet sitzt.

12. Prüfvorrichtung nach einem oder mehreren der vorangegangenen Ansprüche,
**dadurch gekennzeichnet, daß**
die Begrenzungswandungen (52, 53) zentralmittige Öffnungen (56, 57) aufweisen, welche zueinander fluchten und der Steuerschieber (57) an seinen freien Enden Lagerzapfen (58 bzw. 59) aufweist, mit denen er in den Öffnungen (55, 56) lagert.

13. Prüfvorrichtung nach einem oder mehreren der vorangegangenen Ansprüche,
**dadurch gekennzeichnet, daß**
an die zweite Begrenzungswandung (53) anschließend die hydraulische Kolben-Zylindereinheit (11) angeordnet ist, wobei die hydraulische Kolben-Zylindereinheit (11) einen Arbeitszylinder (80) mit dem axial verschieblich gelagerten Arbeitskolben (81) aufweist, wobei der Arbeitskolben (81) den Innenraum des Arbeitszylinders (80) in einen ersten Druckraum (85) und einen zweiten Druckraum (86) aufteilt.

14. Prüfvorrichtung nach einem oder mehreren der vorangegangenen Ansprüche,
**dadurch gekennzeichnet, daß**
die Kolbenstange (9) am Arbeitskolben (81) befestigt ist und vom Arbeitskolben (81) weg bis fast an ihr freies Ende (9a) als Hohlzylinder mit einem Zylinderinnenraum (9b) ausgebildet ist und der Arbeitskolben (81) zentralmittig eine Axialgewindebohrung (84) aufweist, welche mit den Öffnungen (55, 56) fluchtet und einendig in den Zylinderinnenraum (9b) und anderendig in den Innenraum des Arbeitszylinders (80) mündet und der zweite Lagerzapfen (59) des Steuerschiebers (57) bis annähernd zur Begrenzungswandung (83) des Arbeitszylinders (80) hin verlängert ist und in dem Abschnitt, welcher den Arbeitszylinder (80) ragt, als Gewindespindel (91) ausgebildet ist, welches die Gewindebohrung (84) des Arbeitskolbens (81) durchgreift, und ein Stück in den Zylinderinnenraum (9b) der Kolbenstange (9) ragt, so daß der Steuerschieber (57) über das Gewindeorgan (84, 91) mechanisch mit den Arbeitskolben gekoppelt ist.

15. Verwendung einer Prüfvorrichtung nach einem oder mehreren der Ansprüche 1 bis 34 zur Ermittlung des Alterungsverhaltens eines Probenkörpers (5) unter mechanischer Beanspruchung.
